Europäisches Patentamt

European Patent Office

Office européen des brevets

(19)

(11) **EP 0 715 157 A2**

(12) **EUROPÄISCHE PATENTANMELDUNG**

(43) Veröffentlichungstag:
05.06.1996 Patentblatt 1996/23

(51) Int. Cl.$^6$: **G01L 5/16**

(21) Anmeldenummer: 95118805.1

(22) Anmeldetag: 30.11.1995

(84) Benannte Vertragsstaaten:
**DE ES FR GB IT NL**

(30) Priorität: **30.11.1994 DE 4442663**

(71) Anmelder: **GTM GASSMANN THEISS MESSTECHNIK GMBH**
**D-64342 Seeheim-Jugenheim (DE)**

(72) Erfinder:
• **Gassmann, Helmut Dr.**
**D-64342 Seeheim-Jugenheim (DE)**
• **Hose V. Wolfframsdorff, Joachim**
**D-64342 Seeheim-Jugenheim (DE)**
• **Schneider, Peter Dr.**
**D-65428 Rüsselheim (DE)**

(74) Vertreter: **Katscher, Helmut, Dipl.-Ing.**
**Fröbelweg 1**
**D-64291 Darmstadt (DE)**

(54) **Mehrkomponentenkraft- und -momentaufnehmer**

(57) Ein Mehrkomponentenaufnehmer zur Erfassung von Kräften und Momenten weist ein erste Aufnehmerelement (1) auf, das einen an seiner Oberseite und seiner Unterseite zu einer Brückenschaltung (20) verbundene Dehnungsmeßstreifen (16-19) tragenden ersten Biegering (3) hat. An dessen Außenseite und Innenseite greift jeweils ein erstes äußeres bzw. inneres Krafteinleitungsbauteil (6 bzw. 11) an. Koaxial fluchtend zu dem ersten Aufnehmerelement (1) ist ein zweites Aufnehmerelement (2) angeordnet, an dessen Außenseite und Innenseite jeweils ein zweites äußeres bzw. inneres Krafteinleitungsbauteil (8 bzw. 13) angreift. Ein Krafteinleitungsbauteil (11) des ersten Aufnehmerelements (1) ist mit einem Krafteinleitungsbauteil (13) des zweiten Aufnehmerelements (2) kraftübertragend verbunden. Die beiden Biegeringe (3, 4) tragen an ihrer Oberseite und an ihrer Unterseite jeweils im Umfangsabstand zueinander weitere Dehnungsmeßstreifen (21-24, 26-29, 31-34, 36-39, 41-44, 46-49), die jeweils zu Brückenschaltungen (25, 30, 35, 40, 45, 50) verbunden sind.

FIG.1

EP 0 715 157 A2

# Beschreibung

Die Erfindung betrifft einen Mehrkomponentenaufnehmer zur Erfassung von Kräften und Momenten mit mindestens einem ersten Aufnehmerelement, das einen an seiner Oberseite und seiner Unterseite zu einer Brükkenschaltung verbundenen Dehnungsmeßstreifen tragenden ersten Biegering aufweist, an dessen Außenseite und Innenseite jeweils ein erstes äußeres bzw. inneres Krafteinleitungsbauteil angreift.

Derartige Mehrkomponentenaufnehmer zur Erfassung und Messung von Kräften sind bekannt. Der mit Dehnungsmeßstreifen bestückte Verformungskörper ist hierbei ein Biegering. Eine zwischen dem äußeren und inneren Krafteinleitungsbauteil wirkende axiale Kraft führt zu einer Verformung des Biegerings, wobei sich im Falle einer axialen Druckkraft der obere Ringdurchmesser verkleinert und der untere Ringdurchmesser vergrößert. Die so erzeugten Tangentialdehnungen auf der Oberseite und der Unterseite des Biegerings haben entgegengesetzte Vorzeichen und werden mit den Dehnungsmeßstreifen erfaßt, die vorzugsweise als über den gesamten Ringumfang verlaufende Dehnungsmeßspiralen ausgeführt sind. Wenn die Dehnungsmeßstreifen zu einer Wheatstoneschen Brückenschaltung verbunden sind, entsteht ein zur eingeleiteten Kraft proportionales elektrisches Spannungssignal.

Diese bekannten, zur Erfassung und Messung von axial eingeleiteten Kräften bestimmten Kraftaufnehmer werden oftmals für Aufgaben eingesetzt, in denen es zusätzlich erforderlich ist, auch Querkräfte bzw. Momente zu erfassen. Beispielsweise ist es von Bedeutung, beim Betrieb von Prüfmaschinen festzustellen, ob zusätzlich zu den axialen Prüfkräften auch Querkräfte oder Momente eingeleitet werden, die in erster Linie durch eine außermittige Krafteinleitung der Prüfkraft verursacht werden. Solche Querkräfte könnten bisher nur durch zusätzliche, zur Erfassung von Querkräften ausgelegte Aufnehmerelemente erfaßt werden.

Aufgabe der Erfindung ist es daher, einen Mehrkomponentenaufnehmer der eingangs genannten Gattung zu schaffen, der es ermöglicht, zusätzlich zu der eingeleiteten axialen Kraft auch Querkräfte in mindestens zwei Achsen und um diese Achse verlaufende Momente zu erfassen.

Diese Aufgabe wird erfindungsgemäß dadurch gelöst, daß koaxial fluchtend zu dem ersten Aufnehmerelement ein zweites Aufnehmerelement angeordnet ist, an dessen Außenseite und Innenseite jeweils ein zweites äußeres bzw. inneres Krafteinleitungsbauteil angreift, daß eines der Krafteinleitungsbauteile des ersten Aufnehmerelements mit einem der Krafteinleitungsbauteile des zweiten Aufnehmerelements kraftübertragend verbunden ist, und daß die beiden Biegeringe an ihrer Oberseite und an ihrer Unterseite jeweils im Umfangsabstand zueinander weitere Dehnungsmeßstreifen tragen, die jeweils zu Brückenschaltungen verbunden sind, deren Ausgangssignale zu den eingeleiteten Momenten proportional sind und mit denen es möglich ist, auch die eingeleiteten Querkräfte zu messen.

Die Ausgangssignale dieser Brückenschaltungen liefern entweder unmittelbar oder durch eine einfache Auswerteschaltung Ausgangssignale, die den aufgebrachten Kräften in allen drei Achsen und den Momenten um die beiden Querkraftachsen proportional sind.

Mit einem solchen Mehrkomponentenaufnehmer ist beispielsweise die Kontrolle der gleichzeitig zur Axiallast auf eine Werkstückprobe aufgebrachten Momente beim Zugversuch und damit eine Aussage über die Zentrizität der Krafteinleitung möglich. Beim Dauerschwingversuch wird eine Kontrolle von gleichzeitig zur axialen Prüfkraft auf eine Probe aufgebrachten Momenten und Querkräften möglich, wodurch eine wesentlich genauere Aussage über die Gesamtbelastung der Probe ermöglicht wird. Die Versuchsanordnung kann dann so geändert werden, daß nur noch axiale Kräfte in die Probe eingeleitet werden.

Um auch eine Messung der eingeleiteten Querkräfte durchzuführen, genügt es, die Ausgänge der Brückenschaltungen in geeigneter Weise zusammenzuschalten.

Vorteilhafte Ausgestaltungen der Erfindung sind Gegenstand von Unteransprüchen.

Nachfolgend werden Ausführungsbeispiele der Erfindung näher erläutert, die in der Zeichnung dargestellt sind. Es zeigt:

Fig. 1 in schematischer Darstellungsweise einen Axialschnitt durch einen Mehrkomponentenaufnehmer,

Fig. 2 ein vereinfachtes Schaltbild der Brückenschaltungen der Dehnungsmeßstreifen des Mehrkomponentenaufnehmers nach Fig. 1,

Fig. 3 eine Draufsicht auf den oberen Biegering des Mehrkomponentenaufnehmers nach Fig. 1,

Fig. 4 eine Unteransicht des oberen Biegerings des Mehrkomponentenaufnehmers nach Fig. 1,

Fig. 5 eine Draufsicht auf den unteren Biegering des Mehrkomponentenaufnehmers nach Fig. 1,

Fig. 6 eine Unteransicht des unteren Biegerings des Mehrkomponentenaufnehmers nach Fig. 1 und

Fig. 7 einen gegenüber der Fig. 1 vergrößerten Axialschnitt eines Mehrkomponentenaufnehmers.

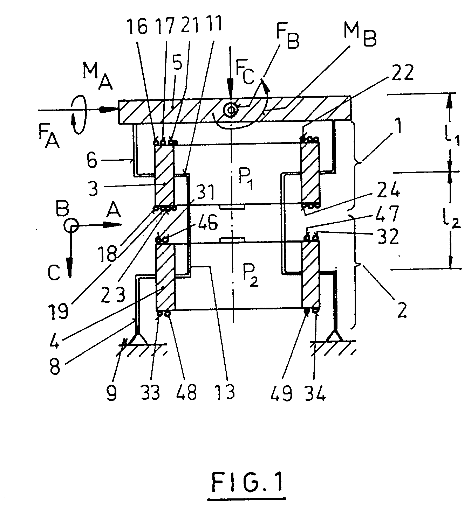

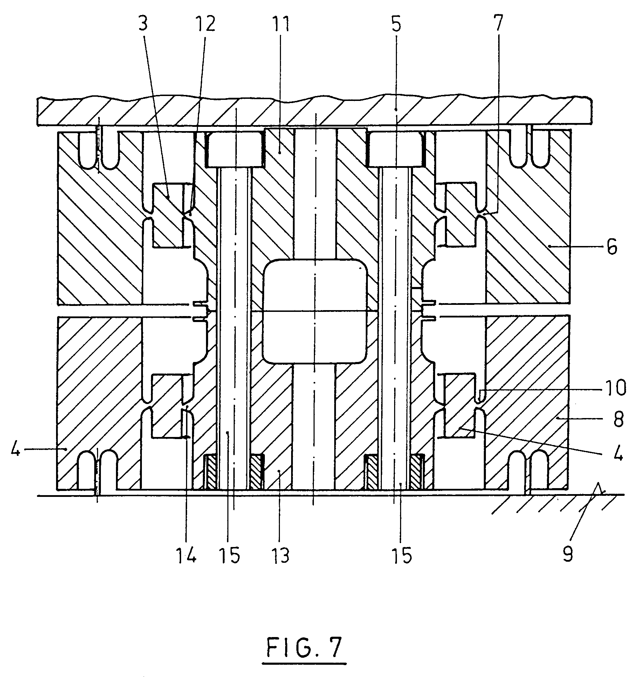

Der in Fig. 1 schematisch und in Fig. 7 in seinen wesentlichen Teilen in einer konkreten Ausführungsform Jeweils in einem Axialschnitt dargestellte Mehrkomponentenaufnehmer weist ein oberes, erstes Aufnehmerelement 1 und ein koaxial fluchtend dazu angeordnetes unteres, zweites Aufnehmerelement 2 auf. Das obere Aufnehmerelement 1 enthält als Verformungskörper einen ersten Biegering 3. Das untere, zweite Aufnehmerelement 2 enthält als Verformungskörper einen zweiten Biegering 4.

Eine Krafteinleitungsplatte 5 greift über ein Krafteinleitungsbauteil 6, das in der konkreten Ausführungsform nach Fig. 7 ein äußerer Krafteinleitungsring ist, an der Außenseite des ersten Biegerings 3 über einen ein Gelenk bildenden Ringsteg 7 an. In entsprechender Weise greift ein zweites äußeres Krafteinleitungsbauteil 8, das sich an einer Unterlage 9 abstützt und in der konkreten Ausführung als äußerer Krafteinleitungsring ausgeführt ist, ebenfalls über einen ein Gelenk bildenden Ringsteg 10 am zweiten Biegering 4 an.

Ein erstes inneres Krafteinleitungsbauteil 11 wird in der konkreten Ausführung nach Fig. 7 durch einen inneren Ring gebildet, der über einen ein Gelenk bildenden Ringsteg 12 an der Innenseite des ersten Biegerings 3 angreift. In entsprechender Weise ist ein zweites inneres Krafteinleitungsbauteil 13 als innerer Krafteinleitungsring ausgeführt, der ebenfalls über einen ein Gelenk bildenden Ringsteg 14 an der Innenseite des zweiten Biegerings 4 angreift.

Die beiden inneren Krafteinleitungsbauteile 11, 13 der beiden Aufnehmerelemente 1, 2 sind in der Weise miteinander kraftübertragend verbunden, daß sie stirnseitig aneinanderliegen und miteinander durch Schrauben 15 verschraubt sind. Die beiden äußeren Krafteinleitungsbauteile 6 und 8 dienen der Einleitung der zu erfassenden äußeren Kräfte und Momente.

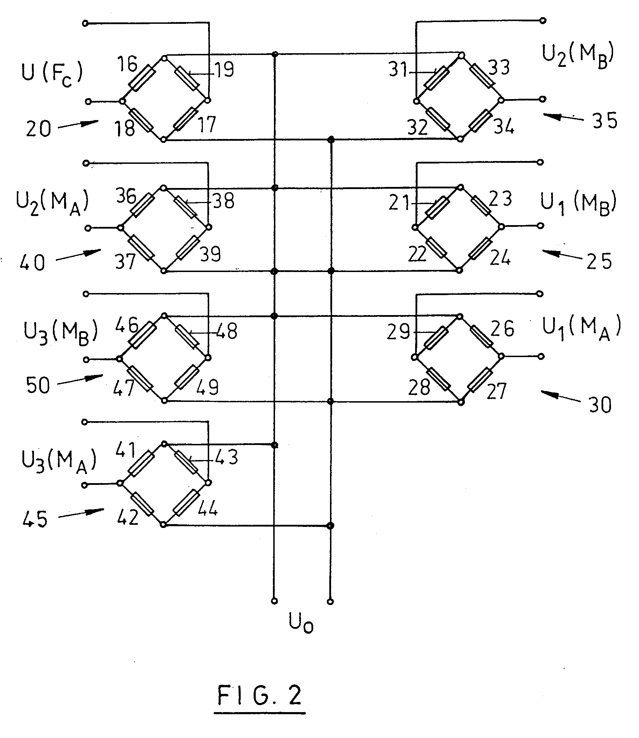

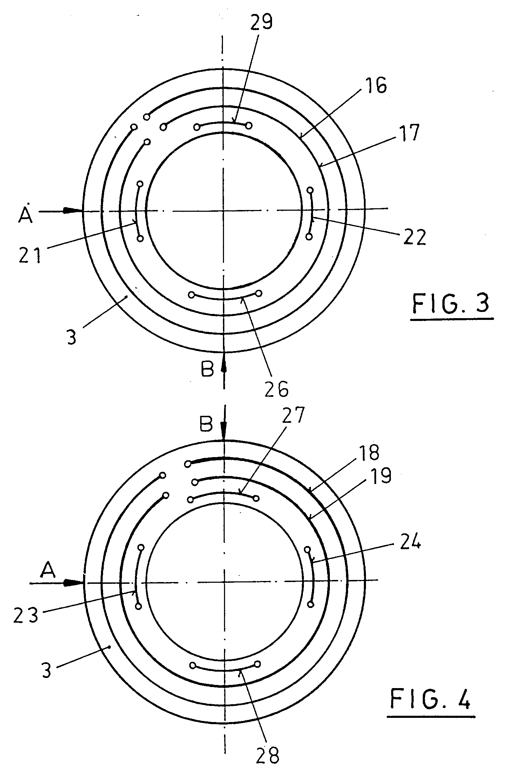

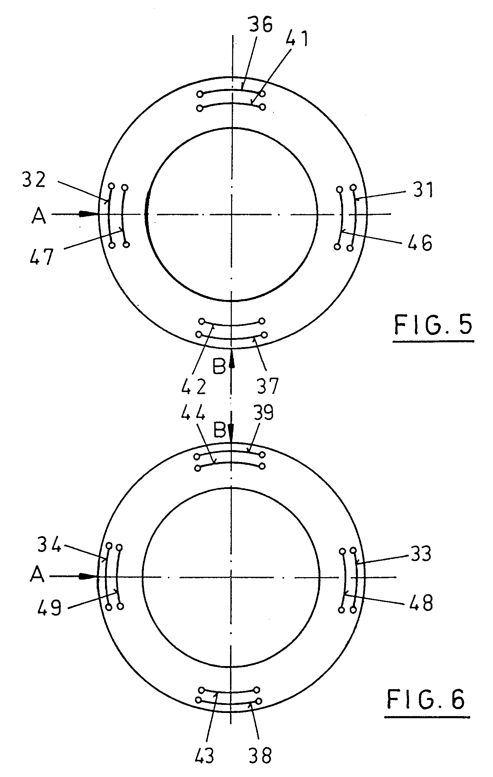

Wie in den Fig. 1, 3 und 4 dargestellt ist, trägt der erste Biegering 3 des oberen Aufnehmerelements 1 an seiner Oberseite (Fig. 3) und seiner Unterseite (Fig. 4) mehrere Gruppen von Dehnungsmeßstreifen, die in der nachfolgend beschriebenen Weise zu mehreren Brückenschaltungen (Fig. 2) zusammengeschaltet sind.

Zwei sich jeweils um den gesamten Umfang erstreckende Dehnungsmeßstreifen 16, 17 an der Oberseite und 18, 19 an der Unterseite des ersten Biegerings 3 sind zu einer Brückenschaltung 20 (Fig. 2) verbunden. Diese Brückenschaltung 20 liefert bei Belastung des Mehrkomponentenaufnehmers durch eine zentrische axiale Kraft $F_C$ ein dieser Kraft proportionales Spannungssignal $U (F_C)$.

In Fig. 1 ist angedeutet, daß an der Krafteinleitungsplatte 5 in Richtung der rechtwinklig zueinander und zu der Längsachse C verlaufenden Achsen A und B Querkräfte $F_A$ und $F_B$ angreifen. Außerdem werden auf die Krafteinleitungsplatte 5 zwei um diese Achsen A und B wirkende Momente $M_A$ und $M_B$ ausgeübt, die ebenfalls in Fig. 1 schematisch angedeutet sind.

Am ersten Biegering 3 sind an den einander gegenüberliegenden Stellen, an denen die Achse A den Biegering 3 schneidet, an der Oberseite quer zur Achsenrichtung verlaufende Dehnungsmeßstreifen 21, 22 und an der Unterseite Dehnungsmeßstreifen 23, 24 aufgebracht. Diese Dehnungsmeßstreifen 21, 22, 23 und 24 sind zu einer Brückenschaltung 25 zusammengeschaltet und liefern bei Einleitung eines Moments $M_B$ um die Achse B ein hierzu proportionales Brückenausgangssignal $U_1(M_B)$.

Am ersten Biegering 3 sind an den einander gegenüberliegenden Stellen, an denen die Achse B den Biegering 3 schneidet, an der Oberseite quer zur Achsenrichtung verlaufende Dehnungsmeßstreifen 26, 29 und an der Unterseite Dehnungsmeßstreifen 27, 28 aufgebracht. Diese Dehnungsmeßstreifen 29, 26, 27 und 28 sind zu einer Brückenschaltung 30 zusammengeschaltet und liefern bei Einleitung eines Moments $M_A$ um die Achse A ein hierzu proportionales Brückenausgangssignal $U_1(M_A)$.

Am zweiten Biegering 4 sind an den einander gegenüberliegenden Stellen, an denen die Achse A den Biegering 4 schneidet, an der Oberseite quer zur Achsenrichtung verlaufende Dehnungsmeßstreifen 31, 32 und an der Unterseite Dehnungsmeßstreifen 33, 34 aufgebracht. Diese Dehnungsmeßstreifen 31, 32, 33 und 34 sind zu einer Brückenschaltung 35 zusammengeschaltet und liefern bei Einleitung eines Moments $M_B$ um die Achse B ein hierzu proportionales Brückenausgangssignal $U_2(M_B)$.

Am zweiten Biegering 4 sind an den einander gegenüberliegenden Stellen, an denen die Achse B den Biegering 4 schneidet, an der Oberseite quer zur Achsenrichtung verlaufende Dehnungsmeßstreifen 36, 37 und an der Unterseite Dehnungsmeßstreifen 38, 39 aufgebracht. Diese Dehnungsmeßstreifen 36, 37, 38 und 39 sind zu einer Brückenschaltung 40 zusammengeschaltet und liefern bei Einleitung eines Moments $M_A$ um die Achse A ein hierzu proportionales Brückenausgangssignal $U_2(M_A)$.

Am zweiten Biegering 4 sind an den einander gegenüberliegenden Stellen, an denen die Achse B den Biegering 4 schneidet, an der Oberseite quer zur Achsenrichtung verlaufende Dehnungsmeßstreifen 41, 42 und an der Unterseite Dehnungsmeßstreifen 43, 44 aufgebracht. Diese Dehnungsmeßstreifen 41, 42, 43 und 44 sind zu einer Brückenschaltung 45 zusammengeschaltet und liefern bei Einleitung eines Moments $M_A$ um die Achse A ein hierzu proportionales Brückenausgangssignal $U_3(M_A)$.

Am zweiten Biegering 4 sind an den einander gegenüberliegenden Stellen, an denen die Achse A den Biegering 4 schneidet, an der Oberseite quer zur Achsenrichtung verlaufende Dehnungsmeßstreifen 46, 47 und an der Unterseite Dehnungsmeßstreifen 48, 49 aufgebracht. Diese Dehnungsmeßstreifen 46, 47, 48 und 49 sind zu einer Brückenschaltung 50 zusammengeschaltet und liefern bei Einleitung eines Moments $M_B$ um die Achse B ein hierzu proportionales Brückenausgangssignal $U_3(M_B)$.

Mit der beschriebenen Anordnung lassen sich somit neben der axial eingeleiteten Kraft $F_C$ in der Brückenschaltung 20 auch die Querkräfte $F_A$ und $F_B$ in Richtung der Achse A bzw. B und die Momente $M_A$ und $M_B$ um die Achse A und B bestimmen, und zwar die Querkraft $F_A$ durch die Brückenschaltungen 25 und 35, die Querkraft $F_B$ durch die Brückenschaltungen 30 und 40, das Moment $M_A$ durch die Brückenschaltung 45 und das Moment $M_B$ durch die Brückenschaltung 50.

In einer (nicht dargestellten) Auswerteschaltung erfolgt die Bestimmung der Querkräfte $F_A$ und $F_B$ nach der Gleichung:

$$F_A \text{ bzw. } F_B = M_1/L_1 - M_2/(l_1 + l_2)$$

wobei $M_1$ und $M_2$ die bei Einleitung einer Querkraft $F_A$ bzw. $F_B$ an den Punkten $P_1$ und $P_2$ entstehenden Moment sind. Die Punkte $P_1$ und $P_2$ liegen im Zentrum der Biegeringe 3 bzw. 4 jeweils in Höhe der Krafteinleitung durch die Krafteinleitungsbauteile 6, 11 bzw. 8, 13. Die Länge $l_1$ bezeichnet den Abstand zwischen dem Angriffspunkt der Kräfte $F_A$, $F_B$ und $P_1$; $l_2$ bezeichnet den Abstand zwischen $P_1$ und $P_2$, wie in Fig. 1 eingetragen ist.

Da die Abstände $l_1$ und $l_2$ konstant sind, ist $M_1$ und $M_2$ nur von $F_A$ bzw. $F_B$ abhängig. Werden die Ausgangsspannungen der Brücken 25, 35 bzw. 30, 40 nun z.B. elektrisch vorzeichenrichtig parallelgeschaltet, dann erhält man ein zu $F_A$ bzw. $F_B$ proportionales Ausgangssignal $U(F_A)$ bzw. $U(F_B)$.

Mehrkomponentenaufnehmer der beschriebenen Bauart können beispielsweise eingesetzt werden, um bei einem Zugversuch zu kontrollieren, ob und welche Momente zusätzlich zur Axiallast auf die Werkstückprobe aufgebracht werden. Die Bestimmung dieser Momente ermöglicht eine Aussage über die Zentrizität der Krafteinleitung. Auf diese Weise ist es möglich, die Krafteinleitung so zu ändern, daß die gemessenen Momente zu Null werden. Dann ist eine zentrische Krafteinleitung gewährleistet.

In entsprechender Weise kann mit einem beschriebenen Mehrkomponentenaufnehmer beim Dauerschwingversuch kontrolliert werden, ob und welche Momente und Querkräfte zusätzlich zur axialen Prüfkraft auf die Probe aufgebracht werden. Auch hierbei ist es möglich, die Prüfanordnung so zu ändern, daß diese Momente und Querkräfte zu Null werden, so daß dann sichergestellt ist, daß nur axiale Kräfte in die Probe eingeleitet werden.

Anstelle der beschriebenen und dargestellten Darstellungsform, bei der die beiden inneren Krafteinleitungsbauteile der beiden Aufnehmerelemente miteinander verbunden sind, kann auch vorgesehen werden, daß die beiden äußeren Krafteinleitungsbauteile der beiden Aufnehmerelemente miteinander verbunden sind und daß die beiden inneren Krafteinleitungsbauteile der beiden Aufnehmerelemente der Einleitung der zu erfassenden äußeren Kräfte und Momente dienen. Zweckmäßigerweise erfolgt dieser Zusammenbau dadurch, daß die beiden äußeren Krafteinleitungsbauteile stirnseitig aneinanderliegen und miteinander verschraubt sind.

## Patentansprüche

1. Mehrkomponentenaufnehmer zur Erfassung von Kräften und Momenten mit mindestens einem ersten Aufnehmerelement, das einen an seiner Oberseite und seiner Unterseite zu einer Brückenschaltung verbundene Dehnungsmeßstreifen tragenden ersten Biegering aufweist, an dessen Außenseite und Innenseite jeweils ein erstes äußeres bzw. inneres Krafteinleitungsbauteil angreift, dadurch gekennzeichnet, daß koaxial fluchtend zu dem ersten Aufnehmerelement (1) ein zweites Aufnehmerelement (2) angeordnet ist, an dessen Außenseite und Innenseite jeweils ein zweites äußeres bzw. inneres Krafteinleitungsbauteil (8 bzw. 13) angreift, daß eines der Krafteinleitungsbauteile (11) des ersten Aufnehmerelements (1) mit einem der Krafteinleitungsbauteile (13) des zweiten Aufnehmerelements (2) kraftübertragend verbunden ist, und daß die beiden Biegeringe (3, 4) an ihrer Oberseite und an ihrer Unterseite jeweils im Umfangsabstand zueinander weitere Dehnungsmeßstreifen (21-24, 26-29, 31-34, 36-39, 41-44, 46-49) tragen, die jeweils zu Brückenschaltungen (25, 30, 35, 40, 45, 50) verbunden sind, deren Ausgangssignale zu den eingeleiteten Momenten proportional sind und mit denen es möglich ist, auch die eingeleiteten Querkräfte zu messen.

2. Mehrkomponentenaufnehmer nach Anspruch 1, dadurch gekennzeichnet, daß die beiden inneren Krafteinleitungsbauteile (11, 13) der beiden Aufnehmerelemente (1, 2) miteinander verbunden sind und daß die beiden äußeren Krafteinleitungsbauteile (6, 8) der beiden Aufnehmerelemente (1, 2) der Einleitung der zu erfassenden äußeren Kräfte und Momente dienen.

3. Mehrkomponentenaufnehmer nach Anspruch 2, dadurch gekennzeichnet, daß die beiden inneren Krafteinleitungsbauteile (11, 13) stirnseitig aneinanderliegen und miteinander verschraubt sind.

4. Mehrkomponentenaufnehmer nach Anspruch 1, dadurch gekennzeichnet, daß die beiden äußeren Krafteinleitungsbauteile (11, 13) der beiden Aufnehmerelemente (1, 2) miteinander verbunden sind und daß die beiden inneren Krafteinleitungsbauteile (6, 8) der beiden Aufnehmerelemente (1, 2) der Einleitung der zu erfassenden äußeren Kräfte und Momente dienen.

5. Mehrkomponentenaufnehmer nach Anspruch 4, dadurch gekennzeichnet, daß die beiden äußeren Krafteinleitungsbauteile (11, 13) stirnseitig aneinanderliegen und miteinander verschraubt sind.

FIG.1

EP 0 715 157 A2

FIG. 2

6

FIG. 3

FIG. 4

EP 0 715 157 A2

FIG.5

FIG.6

8

FIG. 7